# EUROPÄISCHE PATENTSCHRIFT

(11) **EP 2 584 393 B1**
(45) Veröffentlichungstag und Bekanntmachung des Hinweises auf die Patenterteilung: **26.05.2021**
(21) Anmeldenummer: 12187884.7
(22) Anmeldetag: 10.10.2012
(51) Int. Cl.: G01N 15/06, G01N 15/00, G01N 1/28, G02B 21/34, G01N 1/22

(54) **Filterhalter zur Partikelanalyse**
Filter holder for analyzing particles
FIXATION DE FILTRE POUR ANALYSE DE PARTICULES

(30) Priorität: 21.10.2011 DE 102011117134
(43) Veröffentlichungstag der Anmeldung: 24.04.2013
(73) Patentinhaber: Carl Zeiss Microscopy GmbH, 07745 Jena (DE)
(72) Erfinder: Heise, Heino, 37139 Adelebsen (DE); Kohlhaas, Ulrich, 37079 Göttingen (DE)
(74) Vertreter: Müller, Silke

(56) Entgegenhaltungen:
- EP-A2- 0 800 199
- DE-A1- 3 103 865
- US-A- 4 003 135
- US-A- 5 409 832
- US-B1- 6 750 039

## Beschreibung

Die Erfindung betrifft einen Filterhalter zur korrelativen Partikelanalyse bei bildgebenden Mikroskopierverfahren oder Verfahren der Elementenanalyse, umfassend ein Aufnahmeelement mit einer Filterauflage sowie einer Fixiereinheit.

Bekannt sind Filterhalter mit einer Glasplatte. Bei dieser Ausführungsform presst eine in optischer Qualität geschliffene und meist mit einer Antireflexschicht versehene Glasplatte den aus Papier oder Kunststoffgewebe bestehenden Filter plan auf den Filterhalter. Dies geschieht entweder durch Eigengewicht von der Glasplatte und der Fassung, per Verschraubung oder per Federkraft. Der Nachteil dieser Lösung besteht darin, dass auf Dauer, insbesondere beim Reinigungsprozess, die Partikel die Glasplatte zerkratzen und diese dann kostenintensiv ausgetauscht werden muss. Ein weiterer Nachteil ist, dass beim Entfernen der Glasplatte Partikel vom Filter an der Glasplatte verbleiben und ein erneutes Begutachten des Filters andere Ergebnisse liefert als die bei der erste Beobachtung erzielten Ergebnisse. Ferner besteht die Gefahr, dass bei ungenügender Reinigung anhaftende Partikel den als nächstes untersuchten Filter kontaminieren und das Messergebnis verfälschen. Der größte Nachteil besteht jedoch darin, dass mit einer Glasplatte abgedeckte Filter nicht mit einem Elektronenmikroskop abgebildet werden können und zusätzlich keine Elementanalyse per Röntgenspektroskopie durchführbar ist.

Ferner sind Filterhalter mit einem Klemmring bekannt. Bei dieser Ausführungsform wird der Filter an der Peripherie mit einem Spannring festgehalten. Dies geschieht entweder durch Eigengewicht des Rings, per Verschraubung oder per Federkraft. Nachteilig hierbei ist, dass das Filtermaterial durch den auf das Filtrieren folgenden Trocknungsprozess wellig wird. Die normgerechte mikroskopische Untersuchung erfolgt üblicherweise mit Objektiven 5x und 10x. Auf Grund der damit vorliegenden geringen Schärfentiefe ist insbesondere bei automatisierten Analysesystemen mit einem motorischen Scanningtisch und mit einem motorischen Autofokus ein häufiges Nachfokussieren erforderlich. In ungünstigen Fällen wird dadurch die Analysezeit mindestens verdoppelt. Ein Vorteil dieser Anordnung gegenüber dem Filterhalter mit einer Glasplatte besteht darin, dass die Filter mit einem Elektronenmikroskop abgebildet werden können und zusätzlich eine Elementanalyse per Röntgenspektroskopie durchführbar ist. Beispiele für bekannte Filterhalter zeigen die Patentschriften US 4 003 135 A, DE 31 03 865 A1 und EP 0 800 199 A2.

Ausgehend von den beschriebenen Nachteilen der Lösungen des Standes der Technik liegt der Erfindung die Aufgabe zugrunde, einen Filterhalter zur korrelativen Partikelanalyse dahingehend weiter zu entwickeln, dass mit den Vorteilen der Lösungen des Standes der Technik eine kostengünstige, schnelle und reproduzierbare Partikelanalyse auf einem orientiert in einer Ebene fixierten Filter vorgenommen und nachgeprüft werden kann.

Diese Aufgabe wird erfindungsgemäß durch einen Filterhalter der eingangs beschriebenen Art mit dem im Anspruch 1 formulierten Merkmalen gelöst. Vorteilhafte Ausgestaltungen sind den Unteransprüchen 2 bis 10 angegeben.

Erfindungsgemäß ist die als Druckstück ausgebildete, ebene Filterauflage zum Zwecke des Spannens des rechtwinklig zur Fläche des Filters beweglich im Aufnahmeelement angeordnet, wobei die Fixiereinheit aus einem Klemmelement besteht, welches den Filter umfangseitig umschließt und über ein im Aufnahmeelement abgestütztes Spannelement gehalten wird.

Da üblicherweise kreisrunde scheibenförmig ausgebildete Filter verwendet werden sind sowohl das Klemmelement sowie das Spannelement entsprechend ringförmig gestaltet, wobei zur Erzeugung der Spannkraft des Spannelementes in einer vorteilhaften Ausgestaltung das Spannelement von einer im Aufnahmeelement abgestützten Spannfeder umschlossen ist, deren Federkraft gegen das Spannelement wirkt.

Auch Schraubverbindungen oder Bajonettverschlüsse sind als Spannelemente denkbar.

Durch diese Anordnung des Filters wird dieser eben gespannt. Es bedarf keiner zusätzlichen Abdeckung durch eine Glasplatte.

Werkzeuge zur Fixierung des Filters sind beim erfindungsgemäßen Klemmelement nicht erforderlich, wobei es aber auch denkbar ist, mit Hilfe eines Werkzeuges eine Fixierplatte am Aufnahmeelement anzuschrauben.

Bedingt durch ebene Aufspannung des Filters kann die gesamte Filterfläche ohne häufiges Nachfokussieren beobachtet werden. Dies bedeutet einen erheblichen Zeitgewinn gegenüber Lösungen mit nicht ebener Filterlage.

Der Filterhalter kann ohne Einschränkungen sowohl bei Untersuchungen mit einem Lichtmikroskop, als auch bei Untersuchungen mit einem Elektronenmikroskop eingesetzt werden, wobei der Filter beim Plattformwechsel im Filterhalter verbleiben kann.

Über ein auf dem Filterhalter markiertes Koordinatensystem, welches beim Gerätewechsel mittransportiert werden kann, ist eine exakte Relokalisierung einzelner Partikel möglich.

In einer vorteilhaften Ausgestaltungsvariante ist zum Zwecke der einfachen Aufnahme des Filters das Klemmelement mit einer eingearbeiteten Rillenstruktur versehen, wobei es aber auch denkbar ist, im Klemmelement und im Gegenstück rutschhemmende Strukturen einzusetzen.

Ferner ist es von Vorteil, wenn die Verbindungsflächen zwischen dem Klemmelement und dem Spannelement ineinander verzahnende Wellenstrukturen aufweisen, um somit eine feste Fixierung des Filters im Filterhalter zu gewährleisten.

Die Art der Fixierung des Filters gewährleistet somit eine sichere Klemmung und Aufspannung in der Ebene ohne dass es zu Beschädigungen am Filter selbst kommt.

Vorteilhafterweise sind zum Zwecke der Positionierung des Filters zwischen dem Spannelement und dem Klemmelement im mindestens zwei um ungleich 180 Grad versetzte Bohrungen vorhanden, die ein Ausstanzen von entsprechenden Löchern im Filter ermöglichen und zur Aufnahme von Orientierungsstiften dienen.

Die Orientierungsstifte, die dann in die ausgestanzten Löcher im Filter eingreifen, ermöglichen bei einer Nachprüfung der Untersuchungsergebnisse, dass der Filter in der gleichen Position in den Filterhalter eingelegt werden kann, um somit die vorher zum vorgenannten Koordinatensystem markierten Partikel wiederzufinden.

Es ist auch denkbar, die Orientierung des Filters durch andere an sich bekannte Positioniermittel, wie Anschläge usw. vorzunehmen.

In einer vorteilhaften Ausgestaltungsvariante zum Spannen des Filters ist die als Druckstück ausgebildete ebene Filterauflage vertikal ohne Drehbewegung positionierbar, wobei ein Schraubgetriebe verwendet werden kann, welches eine Kegelverzahnung besitzt, die über ein Gewinde am Druckstück angebracht ist in die ein im Aufnahmeelement eingebrachtes Ritzel mit einer Verstellschraube eingreift.

Das Schraubgetriebe ist dabei so konzipiert, dass eine feinfühlige Vertikalbewegung des Druckstückes und somit eine feinfühlige Filterspannung ermöglicht wird.

Es ist auch denkbar, dass die Bewegung des Druckstückes über andere an sich bekannte Bewegungsmechanismen realisiert wird. Hier wäre beispielsweise ein in horizontaler Richtung bewegliches Keilstück eine weitere vorteilhafte Ausgestaltungsvariante.

Bei der ständigen Verwendung gleichartiger Filter kann zweckmäßigerweise die als Druckstück ausgebildete ebene Filterauflage über ein Federelement mit konstanter Federkraft gegen den Filter drücken.

Der erfindungsgemäße Filterhalter soll nachstehend näher erläutert werden. Dazu zeigen:
Figur 1: die schematische Darstellung eines Filterhalters mit einer Glasplatte (Stand der Technik),
Figur 2: die schematische Darstellung Eines Filterhalters mit einem Klemmring (Stand der Technik),
Figur 3: eine schematische Darstellung des Filterhalters in der Draufsicht,
Figur 4: eine Schnittdarstellung A - A des Filterhalters,
Figur 5: eine Schnittdarstellung B - B des Filterhalters und
Figur 6: eine schematische Darstellung der Fixiereinheit.

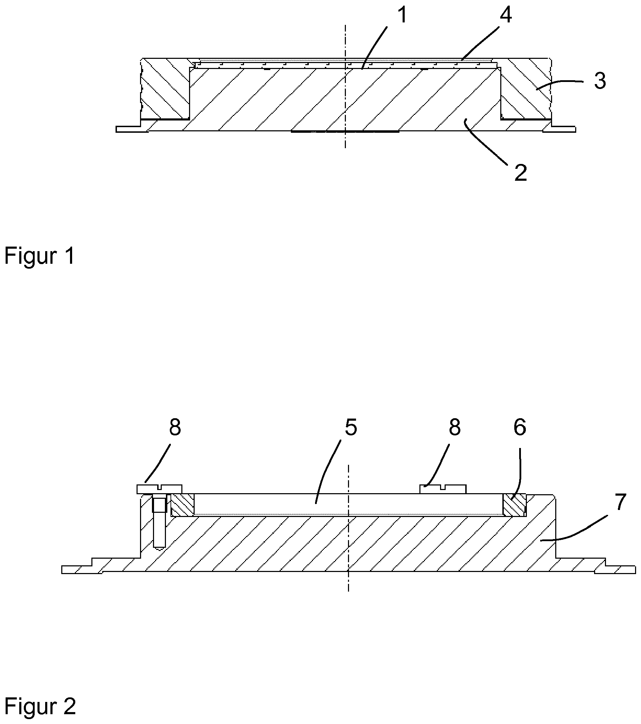

Figur 1 zeigt eine Lösung des Standes der Technik, bei der einen Filter 1, welcher auf einer ebenen Filterauflage 2 angeordnet ist, über das Eigengewicht einer Fassung 3 mit einer Glasplatte 4 fixiert ist, wobei die Fixierung auch über Verschraubungen oder Federelemente möglich wäre.
Wie bereits im Stand der Technik beschrieben, hat diese Lösung den Nachteil, dass beim häufigen Filterwechsel, insbesondere beim Reinigungsprozess, die Partikel die Glasplatte zerkratzen, so dass diese kostenintensiv ausgetauscht werden muss.

Der größte Nachteil besteht jedoch darin, dass mit einer Glasplatte abgedeckte Filter nicht mit einem Elektronenmikroskop abgebildet werden können und zusätzlich keine Elementanalyse per Röntgenspektroskopie durchführbar ist.

In Figur 2 wird eine weitere Lösung nach dem Stand der Technik beschrieben, bei der ein Filter 5 an der Peripherie mit einem Klemmring 6 auf einer Filterauflage 7 positioniert ist. Die vertikale Fixierung des Klemmringes 6 erfolgt hierbei üblicherweise über Schraubverbindungen 8.
Wie eingangs bereits beschrieben hat diese Lösung den Nachteil, dass das Filtermaterial durch den auf das Filtrieren folgenden Trocknungsprozess wellig wird. Ferner ist insbesondere bei automatisierten Analysesystemen mit einem motorischen Scanningtisch und mit einem motorischen Autofokus ein häufiges Nachfokussieren erforderlich.

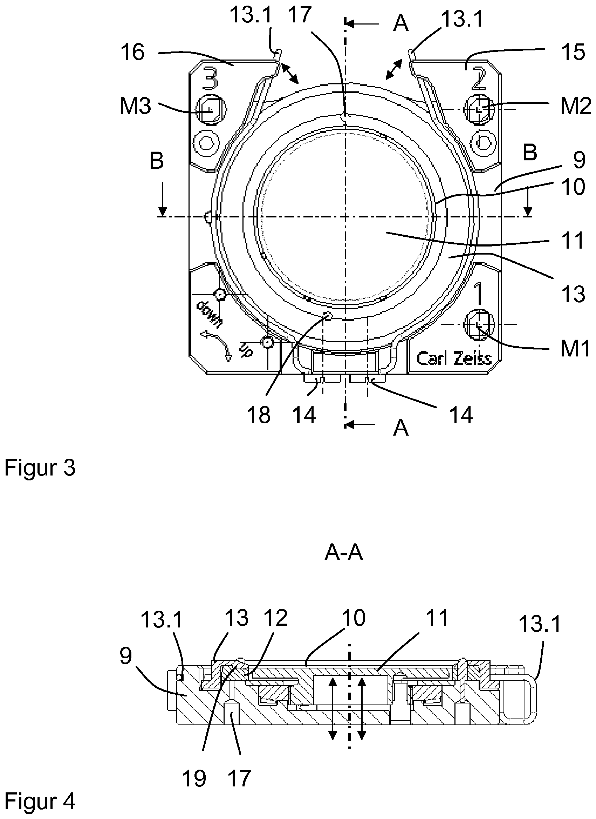

Figur 3 zeigt den erfindungsgemäßen Filterhalter in der Draufsicht mit einem Aufnahmeelement 9, in welcher ein kreisrund scheibenförmiger Filter 10 auf einer als Druckstück ausgebildeten Filterauflage 11 aufgelegt ist.
Der Filter 10 wird dabei von einem Klemmelement 12, welches ihn umfangseitig umschließt, im Aufnahmeelement 9 gehalten und durch ein Spannelement 13 mit einer Spannfeder 13.1, die gegen das Spannelement 13 wirkt, fixiert.
Die Spannfeder 13.1 ist dabei über Befestigungsschrauben 14 mit dem Aufnahmeelement 9 verbunden.

Ferner zeigt Figur 3 zwei um ungleich 180 Grad versetzte Orientierungsstifte 17 und 18, die im Aufnahmeelement 9 angeordnet sind und in entsprechende Durchbrüche im Filter 10 zum Zwecke seiner Lagepositionierung (Verdrehsicherung) eingreifen.
Auf der Oberfläche des Aufnahmeelementes 9 befinden sich drei Markierungen M1, M2, M3 für ein markiertes Koordinatensystem, welches beim Gerätewechsel mittransportiert werden kann, um eine exakte Relokalisierung einzelner Partikel zu ermöglichen.

Figur 4 zeigt eine Schnittdarstellung A-A des Filterhalters aus Figur 1 mit der detaillierten Ansicht der als Druckstück ausgebildeten Filterauflage 11, der Anordnung des Filters 10, des Klemmelementes 12, der Spannfeder 13.1 und das Spannelementes 13.
Die Verbindungsflächen zwischen dem Klemmelement 12 und dem Spannelement 13 weisen dabei ineinander verzahnende Wellenstrukturen 19 auf.

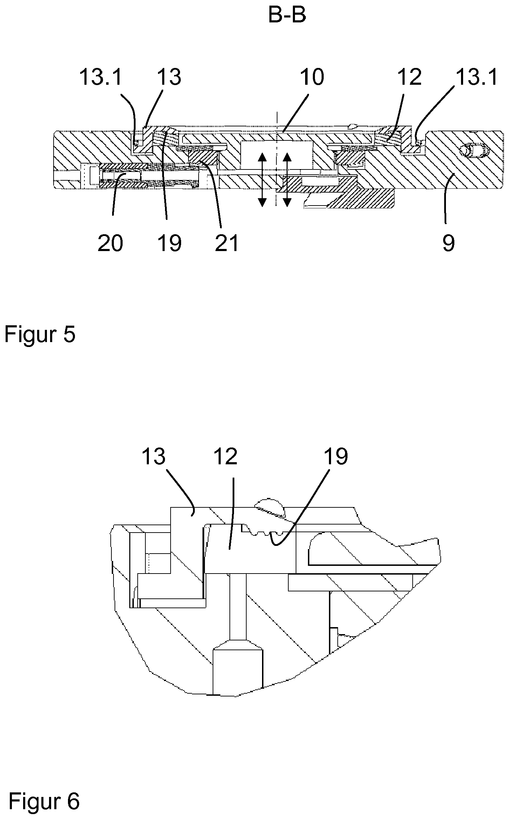

In Figur 5 wir eine Schnittdarstellung B-B aus Figur 1 gezeigt, aus welcher neben den bereits in Figur 4 ersichtlichen Einzelelementen eine Verstellschraube 20 zur vertikalen Bewegungsänderung ohne Drehbewegung der als Druckstück ausgebildeten Filterauflage 11 zu sehen ist. Durch Betätigung der Verstellschraube 20 erfolgt somit über ein nur schematisch dargestelltes Schraubgetriebe 21 das Spannen oder Entspannen des Filters 10.

Figur 6 zeigt eine vergrößerte Darstellung der Fixiereinheit mit dem Spannelement 13, dem Klemmelement 12 sowie den Wellenstrukturen 19 der Verbindungsflächen, wobei der Filter 10, aus Figur 5 nicht ersichtlich, durch die Wellenstrukturen 19 gehalten wird.

Die Orientierung des Filters 10 erfolgt derart, dass dieser erstmalig in den Filterhalter eingelegt wird. Anschließend werden die Löcher zur Aufnahme der Orientierungsstifte 17 und 18 ausgestanzt. Der Filter 10 wird daraufhin wieder entfernt. Nach dem Einbringen der Orientierungsstifte 17 und 18 wird der Filter 10 erneut in den Filterhalter eingelegt und über die Löcher und Orientierungsstifte 17 und 18 in gleicher Lage wie beim ersten Einlegen positioniert.

### Bezugszeichenliste

- 1,5,10: Filter
- 2,7,11: Filterauflage
- 3: Fassung
- 4: Glasplatte
- 6: Klemmring
- 8: Schraubverbindung
- 9: Aufnahmeelement
- 12: Klemmelement
- 13: Spannelement
- 13.1: Spannfeder
- 14: Befestigungsschrauben
- 15,16: Schenkel
- 17,18: Orientierungsstift
- 19: Wellenstruktur
- 20: Verstellschraube
- 21: Schraubgetriebe
- M1,M2,M3: Markierungen

## Patentansprüche

1. Filterhalter zur korrelativen Partikelanalyse bei bildgebenden Mikroskopierverfahren oder Verfahren der Elementenanalyse, umfassend ein Aufnahmeelement (9) mit einer Filterauflage (11), sowie einer Fixiereinheit, **dadurch gekennzeichnet, dass** die ebene Filterauflage (11) als Druckstück ausgebildet ist, und
die ebene Filterauflage (11) zum Zwecke des Spannens des Filters (10) rechtwinklig zur Fläche des Filters (10) beweglich im Aufnahmeelement (9) angeordnet ist und
die Fixiereinheit als Klemmelement (12) ausgebildet ist, welches den Filter (10) umfangseitig umschließt, und
das den Filter umschließende Klemmelement (12) über ein im Aufnahmeelement (9) abgestütztes Spannelement (13) gehalten wird, wobei der Filter (10) entlang seines Umfangs zwischen Klemmelement (12) und Spannelement (13) gehalten wird.

2. Filterhalter zur korrelativen Partikelanalyse nach Anspruch 1, **dadurch gekennzeichnet, dass** bei Verwendung kreisrund scheibenförmig ausgebildeter Filter (10) das Klemmelement (12) sowie das Spannelement (13) ringförmig gestaltet sind.

3. Filterhalter zur korrelativen Partikelanalyse nach den Ansprüchen 1 und 2, **dadurch gekennzeichnet, dass** zur Erzeugung der Spannkraft des Spannelementes (13) das Spannelement (13) von einer im Aufnahmeelement (9) abgestützten Spannfeder (13.1) umschlossen ist, deren Federkraft gegen das Spannelement (13) wirkt.

4. Filterhalter zur korrelativen Partikelanalyse nach den Ansprüchen 1 und 2, **dadurch gekennzeichnet, dass** zum Zwecke der Aufnahme des Filters (10) das Klemmelement (12) mit einer eingearbeiteten Rillenstruktur versehen ist.

5. Filterhalter zur korrelativen Partikelanalyse nach den Ansprüchen 1 bis 4, **dadurch gekennzeichnet, dass** die Verbindungsflächen zwischen dem Klemmelement (12) und dem Spannelement (13) ineinander verzahnende Wellenstrukturen (19) aufweisen.

6. Filterhalter zur korrelativen Partikelanalyse nach Anspruch 1, **dadurch gekennzeichnet, dass** zum Zwecke der Positionierung des Filters (10) zwischen Spannelement (13) und Klemmelement (12) mindestens zwei um ungleich 180 Grad versetzte Bohrungen vorhanden sind, die ein Ausstanzen von entsprechenden Löchern im Filter (10) ermöglichen und zur Aufnahme von Orientierungsstiften (17,18) dienen.

7. Filterhalter zur korrelativen Partikelanalyse nach Anspruch 1, **dadurch gekennzeichnet, dass** die als Druckstück ausgebildete ebene Filterauflage (11) vertikal ohne Drehbewegung positionierbar ist.

8. Filterhalter zur korrelativen Partikelanalyse nach Anspruch 7, **dadurch gekennzeichnet, dass** zur vertikalen Bewegung des Druckstückes ein Schraubgetriebe (21) verwendet wird, welches eine Kegelverzahnung umfasst, die über ein Gewinde an der Filterauflage (11) angebracht ist in die ein im Aufnahmeelement (9) eingebrachtes Ritzel mit einer Verstellschraube (20) eingreift.

9. Filterhalter zur korrelativen Partikelanalyse nach Anspruch 7, **dadurch gekennzeichnet, dass** die Vertikalbewegung der als Druckstück ausgebildeten Filterauflage (11) über ein in horizontaler Richtung bewegliches Keilstück realisierbar ist.

10. Filterhalter zur korrelativen Partikelanalyse nach Anspruch 1, **dadurch gekennzeichnet, dass** die als Druckstück ausgebildete ebene Filterauflage (11) über ein Federelement mit konstanter Federkraft gegen den Filter (10) drückt.

## Claims

1. Filter holder for correlative particle analysis during imaging microscopy methods or methods of elemental analysis, comprising a receiving element (9) with a filter support (11), and a fixing unit, **characterized in that**
the planar filter support (11) is designed as a pressure piece, and
the planar filter support (11) is movably arranged in the receiving element (9) for the purpose of tensioning the filter (10) at right angles to the surface of the filter (10), and
the fixing unit is designed as a clamping element (12) which circumferentially encloses the filter (10), and
the clamping element (12) enclosing the filter is held by a tensioning element (13) which is supported in the receiving element (9), the filter (10) being held along its circumference between the clamping element (12) and the tensioning element (13).

2. Filter holder for correlative particle analysis according to Claim 1, **characterized in that**, when circular, disc-shaped filters (10) are used, the clamping element (12) and the tensioning element (13) are designed in the form of a ring.

3. Filter holder for correlative particle analysis according to Claims 1 and 2, **characterized in that**, for generating the tensioning force of the tensioning element (13), the tensioning element (13) is enclosed by a tensioning spring (13.1), which is supported in the receiving element (9) and the spring force of which acts against the tensioning element (13).

4. Filter holder for correlative particle analysis according to Claims 1 and 2, **characterized in that**, for the purpose of receiving the filter (10), the clamping element (12) is provided with an integrated groove structure.

5. Filter holder for correlative particle analysis according to Claims 1 to 4, **characterized in that** the connecting surfaces between the clamping element (12) and the tensioning element (13) have interlocking wave structures (19).

6. Filter holder for correlative particle analysis according to Claim 1, **characterized in that**, for the purpose of positioning the filter (10) between the tensioning element (13) and the clamping element (12), there are at least two bores, offset by other than 180 degrees, which allow corresponding holes to be punched out in the filter (10) and serve for receiving orientation pins (17, 18).

7. Filter holder for correlative particle analysis according to Claim 1, **characterized in that** the planar filter support (11) designed as a pressure piece can be positioned vertically without a rotary movement.

8. Filter holder for correlative particle analysis according to Claim 7, **characterized in that**, for the vertical movement of the pressure piece, a worm gear (21) is used, comprising a bevel gearing which is mounted on the filter support (11) via a thread and in which a pinion incorporated in the receiving element (9) and having an adjusting screw (20) engages.

9. Filter holder for correlative particle analysis according to Claim 7, **characterized in that** the vertical movement of the filter support (11) designed as a pressure piece can be realized by way of a wedge-shaped piece which is movable in a horizontal direction.

10. Filter holder for correlative particle analysis according to Claim 1, **characterized in that** the planar filter support (11) designed as a pressure piece presses by way of a spring element with constant spring force against the filter (10).

## Revendications

1. Porte-filtre destiné à l'analyse corrélative de particules dans des procédés de microscopie par imagerie ou des procédés d'analyse d'éléments, ledit porte-filtre comprenant un élément de réception (9) pourvu d'un support de filtre (11) et une unité de fixation, **caractérisé en ce que**
le support de filtre plan (11) est conçu comme une pièce de pression, et
le support de filtre plan (11) est disposé de manière mobile dans l'élément de réception (9) perpendiculairement à la surface du filtre (10) dans le but de tendre le filtre (10) et
l'unité de fixation est conçue comme un élément de pincement (12) qui entoure circonférentiellement le filtre (10), et
l'élément de pincement (12) entourant le filtre est maintenu par un élément de serrage (13) supporté dans l'élément de réception (9), le filtre (10) étant maintenu le long de sa circonférence entre l'élément de pincement (12) et l'élément de serrage (13).

2. Porte-filtre destiné à l'analyse corrélative de particules selon la revendication 1, **caractérisé en ce que**, lorsqu'on utilise un filtre (10) circulaire en forme de disque, l'élément de pincement (12) et l'élément de serrage (13) sont annulaires.

3. Porte-filtre destiné à l'analyse corrélative de particules selon les revendications 1 et 2, **caractérisé en ce que**, pour générer la force de serrage de l'élément de serrage (13), l'élément de serrage (13) est enfermé par un ressort de serrage (13.1) qui est supporté dans l'élément de réception (9) et dont la force de ressort s'oppose à l'élément de serrage (13).

4. Porte-filtre destiné à l'analyse corrélative de particules selon les revendications 1 et 2, **caractérisé en ce que** l'élément de pincement (12) est pourvu d'une structure de rainures ménagées par usinage dans le but de recevoir le filtre (10).

5. Porte-filtre destiné à l'analyse corrélative de particules selon les revendications 1 à 4, **caractérisé en ce que** les surfaces de liaison comportent entre l'élément de pincement (12) et l'élément de serrage (13) des structures ondulées (19) les unes dans les autres.

6. Porte-filtre destiné à l'analyse corrélative de particules selon la revendication 1, **caractérisé en ce qu'**au moins deux alésages décalés d'un angle différent de 180 degrés, qui permettent de ménager des trous correspondants dans le filtre (10) et qui servent à recevoir des broches d'orientation (17, 18), sont prévus pour positionner le filtre (10) entre l'élément de serrage (13) et l'élément de pincement (12).

7. Porte-filtre destiné à l'analyse corrélative de particules selon la revendication 1, **caractérisé en ce que** le support de filtre plan (11) conçu comme une pièce de pression peut être positionné verticalement sans mouvement de rotation.

8. Porte-filtre destiné à l'analyse corrélative de particules selon la revendication 7, **caractérisé en ce qu'**un engrenage hélicoïdal (21) est utilisé pour déplacer verticalement la pièce de pression, lequel engrenage comprend une denture conique qui est fixée au support de filtre (11) par un filetage et dans laquelle un pignon inséré dans l'élément de réception (9) s'engage avec une vis de réglage (20).

9. Porte-filtre destiné à l'analyse corrélative de particules selon la revendication 7, **caractérisé en ce que** le déplacement vertical du support de filtre (11) en forme de pièce de pression peut être effectué par le biais d'une pièce de coin mobile dans le sens horizontal.

10. Porte-filtre destiné à l'analyse corrélative de particules selon la revendication 1, **caractérisé en ce que** le support de filtre plan (11) réalisé sous la forme d'une pièce de pression vient en appui contre le filtre (10) par le biais d'un élément à ressort ayant une force de ressort constante.
